# EUROPÄISCHE PATENTSCHRIFT

(11) **EP 2 121 791 B1**
(45) Veröffentlichungstag und Bekanntmachung des Hinweises auf die Patenterteilung: **16.07.2014**
(21) Anmeldenummer: 07857418.3
(22) Anmeldetag: 11.12.2007
(51) Int. Cl.: C08G 18/48, C08G 18/76, C08J 9/228, F16F 9/53, H01F 1/26

(54) **ANISOTROPE ZELLIGE ELASTOMERE**
ANISOTROPIC CELLULAR ELASTOMERS
ÉLASTOMÈRE CELLULAIRE ANISOTROPE

(30) Priorität: 20.12.2006 EP 06126683
(43) Veröffentlichungstag der Anmeldung: 25.11.2009
(73) Patentinhaber: BASF SE, 67056 Ludwigshafen (DE)
(72) Erfinder: DUWENHORST, Jörn, 49448 Lemförde (DE); RÜLLMANN, Maximilian, 49448 Lemförde (DE); PRISSOK, Frank, 49448 Lemförde (DE); LASAI, Sven, 49448 Stemshorn (DE); MAYER, Steffen, 49459 Lembruch (DE); HARMS, Michael, 49356 Diepholz (DE); GABRIEL, Claus, 64347 Griesheim (DE)
(86) Internationale Anmeldenummer: PCT/EP2007/063731
(87) Internationale Veröffentlichungsnummer: WO 2008/074701

(56) Entgegenhaltungen:
- EP-A- 0 784 163
- WO-A-2006/066763
- DE-A1-102004 041 649
- DE-A1-102005 008 263
- DE-A1-102005 059 710
- SHEN Y ET AL: "Experimental research and modeling of magnetorheological elastomers" JOURNAL OF INTELLIGENT MATERIAL SYSTEMS AND STRUCTURES, TECHNOMIC PUBL., LANCASTER, PA, US, Bd. 16, Nr. 2, Januar 2004 (2004-01), Seiten 27-35, XP002355157 ISSN: 1045-389X
- GINDER J M ET AL: "Magnetorheological elastomers: Properties and applications" PROCEEDINGS OF THE SPIE, SPIE, BELLINGHAM, VA, US, Bd. 3675, März 1999 (1999-03), Seiten 131-138, XP002355156 ISSN: 0277-786X
- DAVIS L C: "Model of magnetorheological elastomers" JOURNAL OF APPLIED PHYSICS, AMERICAN INSTITUTE OF PHYSICS. NEW YORK, US, Bd. 85, Nr. 6, 15. März 1999 (1999-03-15), Seiten 3348-3351, XP012046944 ISSN: 0021-8979
- JOLLY M R ET AL: "THE MAGNETOVISCOELASTIC RESPONSE OF ELASTOMER COMPOSITES CONSISTING OF FERROUS PARTICLES EMBEDDED IN A POLYMER MATRIX" JOURNAL OF INTELLIGENT MATERIAL SYSTEMS AND STRUCTURES, TECHNOMIC PUBL., LANCASTER, PA, US, Bd. 7, Nr. 6, November 1996 (1996-11), Seiten 613-622, XP009057466 ISSN: 1045-389X

## Beschreibung

Die vorliegende Erfindung betrifft bevorzugt ohne äußere Einwirkung, insbesondere bereits ohne Einwirkung eines künstlichen Magnetfeldes anisotrope zellige Elastomere, wobei die Anisotropie dadurch definiert ist, dass der Druckmodul, bevorzugt gemessen in Anlehnung an DIN ISO 7743 in einer von 3 orthogonalen Richtungen mindestens um einen Faktor 1,5, bevorzugt um einen Faktor 2 bis 50 größer ist als in jeweils den anderen beiden Richtungen. Des weiteren betrifft die Erfindung zellige Elastomere, wobei das zellige Elastomer magnetisierbare Teilchen enthält, die eine kettenförmige Ausrichtung bevorzugt parallel zueinander entlang einer Raumrichtung aufweisen. Außerdem bezieht sich die Erfindung auf Verfahren zur Herstellung von zelligen Elastomeren, bevorzugt zelligen Polyurethanelastomeren, besonders bevorzugt zelligen Polyurethanelastomeren mit einer Dichte nach DIN EN ISO 845 zwischen 200 kg/m³ und 5000 kg/m³, wobei sich die Dichte auf das Gesamtgewicht des zelligen Polyurethanelastomers bezieht, d. h. inklusive des Gewichts der magnetisierbaren Teilchen, wobei man die zelligen Elastomere in Gegenwart von magnetisierbaren Teilchen herstellt, so dass diese magnetisierbaren Teilchen in dem zelligen Elastomer vorliegen, und die Herstellung der zelligen Elastomeren in Gegenwart eines bevorzugt künstlichen Magnetfeldes durchführt, das eine Flussdichte von größer als 0,01 Tesla, bevorzugt mit einer Flussdichte zwischen 0,05 und 2 Tesla aufweist. Außerdem betrifft die vorliegende Erfindung derart erhältliche zellige Elastomere, insbesondere Kraftfahrzeugzusatzfedern, Kraftfahrzeugdämpferlager, Kraftfahrzeugfahrwerkslager enthaltend die erfindungsgemäßen zelligen Elastomere.

Zellige, beispielsweise mikrozellige Polyisocyanat-Polyadditionsprodukte, üblicherweise Polyurethane und/oder Polyisocyanurate, die gegebenenfalls Harnstoffstrukturen enthalten können und erhältlich sind durch Umsetzung von Isocyanaten mit gegenüber Isocyanaten reaktiven Verbindungen sowie Verfahren zu ihrer Herstellung sind allgemein bekannt.

Eine besondere Ausgestaltung dieser Produkte sind zellige, insbesondere mikrozellige Polyurethanelastomere, die sich von üblichen Polyurethanschaumstoffen durch ihre wesentlich höhere Dichte von üblicherweise 200 bis 700 kg/m³, bevorzugt 300 bis 700, ihre besonderen physikalischen Eigenschaften und die dadurch bedingten Anwendungsmöglichkeiten unterscheiden. Derartige Polyurethanelastomere finden beispielsweise Anwendung als schwingungs- und stoßdämpfende Elemente, insbesondere im Automobilbau. Die aus Polyurethanelastomeren hergestellten Federungselemente werden in Automobilen beispielsweise innerhalb der Gesamtfederbeinkonstruktion, bestehend aus Stoßdämpfer, Spiralfeder und der Elastomerfeder, auf die Kolbenstange des Stoßdämpfers geschoben.

Zellige Polyurethanelastomere sind nur bis zu einer bestimmten Materialhärte herstellbar, da die Materialhärte nur über die Dichte eingestellt wird. Hohe Härten sind aber bei radführenden Elastomer-Anwendungen (Lagern) im Bereich Federung/Fahrwerk unbedingt erforderlich. Gesucht ist daher eine Lösung, die eine Härtesteigerung in einer Kraftrichtung (Fahrzeugquerrichtung) erlaubt, die übrigen Richtungen aber unverändert (weich) belässt.

Hohe Härten haben außerdem den Nachteil, dass hohle zylindrische Zusatzfedern auf Basis von Polyurethanelastomeren nicht mehr über den Kern entformt werden können. Eine höhere Härte, bevorzugt nur in Kraftrichtung, würde hier eine Lösung darstellen.

Aufgabe der Erfindung war es somit, zellige Polyisocyanat-Polyadditionsprodukte, bevorzugt zellige Polyurethanelastomere zu entwickeln, die die oben genannten Probleme lösen und insbesondere für radführende Anwendungen im Kraftfahrzeugfahrwerk die Vorteile einer hohen Materialhärte und -dichte mit den Vorteilen der bekannten Polyurethanelastomere und deren Fertigungstechnik verbinden.

Diese Aufgaben konnten durch die eingangs dargestellten anisotropen zelligen Elastomere gelöst werden.

Bei den erfindungsgemäßen anisotropen zelligen Elastomere wird man den Druckmodul bevorzugt in Anlehnung an DIN ISO 7743 bestimmen, besonders bevorzugt wird man dabei folgende Anpassungen vornehmen:
- Die Probekörper werden mit den Platten der Prüfmaschine verklebt, entsprechend Verfahren B von DIN ISO 7743.
- Die Druckeigenschaften werden bei einer Prüfgeschwindigkeit von 30 mm/min bestimmt, statt 10 mm/min.
- Die Proben sind scheibenförmig mit 9,0 mm Durchmesser und 4,0 mm Dicke, statt 29 mm Durchmesser und 12,5 mm Höhe.
- Der Druckmodul wird aus der Kraft-Verformungskurve bei einer gegebenen Verformung von 4 % statt der in DIN ISO 7743 geforderten 10 % bzw. 20 % bestimmt. Die maximale Deformation beträgt 7 %, statt 25 %.

Die erfindungsgemäßen Formkörper zeichnen sich dadurch aus, dass harte zellige Polyurethanelastomer-Zusatzfedern gefertigt werden können, die in Kraftrichtung eine hohe Härte (große Steifigkeit) haben, aber dennoch über den Kern zu entformen sind.

Außerdem können erfindungsgemäß Dämpferlager hergestellt werden, die eine signifikate Kennlinienspreizung in radialer Richtung aufweisen (quer zur Fahrtrichtung hart zwecks Optimierung des Fahrverhalterns/Handlings und längs zur Fahrtrichtung weich zur Reduzierung von Abrollgeräuschen). Wichtig ist diese Kennlinienspreizung u. a. dann, wenn der Stoßdämpfer und damit auch das Dämpferlager maßgeblich an der Radführung beteiligt sind (z. B. bei McPherson Vorderachsen).

Durch diese Erfindung wird es zudem möglich, weitere Anwendungen zellulärer Elastomere im Bereich Fahrwerk (Chassis) zu erschließen, da auch hier die oben erläuterte Kennlinienspreizung quer/längs in aller Regel erforderlich ist

Verwendung finden die erfindungsgemäßen zelligen Elastomere somit bevorzugt als Dämpfungs- und Lagerungselemente im Fahrzeugbau, beispielsweise im Automobilbau, z. B. als Zusatzfedern, Anschlagpuffer, Federbein-Stützlager (insbesondere für McPherson-Achsen), Stoßdämpferlager, Hilfsrahmenlager, Quer- und Längslenkerlager.

Als zellige Elastomere kommen allgemein bekannte Elastomere in Betracht, die in Gegenwart von magnetisierbaren Teilchen hergestellt werden können. Wie eingangs bereits dargestellt sind Polyurethanelastomere bevorzugt. Derartige Elastomere sind ohne die ausgerichteten magnetisierbaren Teilchen allgemein bekannt und vielfältig beschrieben. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 1 mm, besonders bevorzugt 0,01 bis 0,25 mm. Elastomere auf der Basis von Polyisocyanat-Polyadditionsprodukten und ihre Herstellung sind allgemein bekannt und vielfältig beschrieben, beispielsweise in EP-B 117 15 15, EP-A 62 835, EP-A 36 994, EP-A 250 969, DE-A 195 48 770 und DE-A 195 48 771.

Die erfindungsgemäßen anisotropen Eigenschaften der zelligen Elastomere werden bevorzugt dadurch erzeugt, dass das zellige Elastomer magnetisierbareTeilchen, bevorzugt magnetisierbare Teilchen mit ferro- oder ferrimagnetischen Eigenschaften, besonders bevorzugt weichmagnetische Ferro- oder Ferrimagnetika enthält.

Die isotrope Einarbeitung von magnetisierbaren Teilchen in zellige Elastomere ist aus der WO 2006/007882 bekannt. Die isotrope oder auch anisotrope Einarbeitung von magnetisierbaren Teilchen in kompakte Elastomere ist aus der US 6,476,113 B1, der US 2005/0116194 A1 oder der WO 2006/024457 A1 bekannt. Als Materialien für die magnetisierbaren Teilchen der vorliegenden Erfindung kommen die in o. g. Schriften beschriebenen Materialien in Frage. Bevorzugt sind das Eisen, Kobalt, Nickel (auch in nichtreiner Form) und Legierungen daraus wie Eisen-Kobalt, Eisen-Nickel, magnetischer Stahl, Eisen-Silizium, und/oder deren Mischungen, weiterhin oxidkeramische Werkstoffe, wie kubische Ferrite, Perowskite und Granaten der allgemeinen Formel MO·Fe₂O₃ mit einem oder mehreren Metallen aus der Gruppe Mn, Fe, Co, Ni, Cu, Zn, Ti, Cd oder Magnesium und/oder deren Mischungen. Des weiteren eignen sich Mischferrite wie MnZn-, NiZn-, NiCo-, NiCuCo-, NiMg-, CuMg-Ferrite und/oder deren Mischungen, wie auch Partikel aus Eisencarbid, Eisennitrid, Legierungen von Vanadium, Wolfram, Kupfer und Mangan und/oder deren Mischungen. Des weiteren eignet sich insbesondere Magnetit (Fe₃O₄).

Bevorzugt werden als magnetisierbare Teilchen Eisenpulver, bevorzugt feinverteiltes Eisenpulver, besonders bevorzugt Carbonyleisenpulver, welches bevorzugt aus Eisenpentacarbonyl hergestellt ist, gas- und/oder wasserverdüstes Eisenpulver, gecoatetes Eisenpulver und Mischungen der zuvor genannten magnetisierbaren Teilchen eingesetzt. Die magnetisierbaren Teilchen können bevorzugt eine mittlere längste Ausdehnung zwischen 0,01 bis 1000 µm aufweisen.

Die Form der magnetisierbaren Teilchen kann gleichmäßig oder unregelmäßig sein. Beispielsweise kann es sich um sphärische, stäbchen- oder nadelförmige Teilchen handeln. Dabei ist die sphärische Form, d. h. die Kugelform oder eine der Kugelform ähnliche Form, besonders dann bevorzugt, wenn hohe Füllgrade angestrebt werden.

Wenn sphärische Teilchen verwendet werden, beträgt der mittlere Durchmesser [d₅₀] vorzugsweise 0,01 bis 1000 µm, besonders bevorzugt 0,1 bis 100 µm, insbesondere 0,5 bis 10 µm. Die vorgenannten Größenordnungen für den mittleren Durchmesser sind insbesondere für die Herstellung der anisotropen zelligen Elastomere vorteilhaft, weil sie zu einer besseren Redispergierbarkeit und einer besseren Fließfähigkeit der mit den Teilchen beladenen PU Komponenten führen.

Wenn keine sphärischen Teilchen verwendet werden, beträgt die mittlere längste Ausdehnung der erfindungsgemäß vorgesehenen magnetisierbaren Teilchen vorzugsweise 0,01 bis 1000 µm, bevorzugt 0,1 bis 500 µm. Wenn als magnetisierbares Teilchen Metallpulver verwendet wird, so kann dieses beispielsweise durch Reduktion entsprechender Metalloxide erhalten werden. Gegebenenfalls schließt sich an die Reduktion noch ein Sieb- oder Mahlprozess an. Weitere Wege zur Herstellung entsprechend geeigneter Metallpulver ist die elektrolytische Abscheidung oder die Herstellung von Metallpulver über Wasser- oder Gasverdüsung. Es können auch Mischungen magnetisierbarer Teilchen zum Einsatz kommen. Insbesondere kann die Größenverteilung der verwendeten magnetisierbaren Teilchen auch bimodal sein.

Wie eingangs dargestellt sind Gegenstand der vorliegenden Erfindung ferner zellige Elastomere, wobei das zellige Elastomer magnetisierbare Teilchen enthält, die eine kettenförmige Ausrichtung bevorzugt parallel zueinander entlang einer Raumrichtung aufweisen. Dabei sind die magnetisierbaren Teilchen vorzugsweise kettenförmig angeordnet, wobei die Ketten parallel zueinander angeordnet sind. Dabei verlaufen die Ketten vorzugsweise linear, das heißt parallel zu einer Raumrichtung, oder bogenförmig, beispielsweise U-förmig, besonders bevorzugt linear. Die magnetisierbaren Teilchen im Elastomer können dabei lokal unterschiedlich stark ausgerichtet sein. Die lokale Ausrichtung im Elastomer kann bei festgehaltenem Füllgrad beispielsweise durch das Verhältnis des mittleren Teilchenabstandes senkrecht zu den Ketten zum mittleren Teilchenabstandes entlang der Ketten bestimmt werden. Je größer dieses Verhältnis bei gegebenem Füllgrad durch magnetisierbare Teilchen ist, desto stärker ausgeprägt ist die lokale Ausrichtung. Die kettenförmigen Anordnungen der magnetisierbaren Teilchen können durchgängig durch den gesamten Formkörper des zelligen Elastomers sein, aber auch kürzer. Kürzere Ketten ergeben sich beispielsweise durch Unterbrechungen aufgrund der zelligen Struktur.

Bevorzugt weisen die magnetisierbaren Teilchen in dem zelligen Polyurethanelastomer eine kettenförmige Ausrichtung entlang einer Raumrichtung auf und sind entsprechend anisotrop ausgerichtet. Diese kettenförmige Ausrichtung ist das Ergebnis der Wirkung eines Magnetfeldes auf die magnetisierbaren Teilchen während der Herstellung des zelligen Elastomers und die Fixierung dieser Ausrichtung durch das Aushärten des zelligen Elastomers. Unter dem Ausdruck kettenförmige Ausrichtung ist zu verstehen, dass die magnetisierbaren Teilchen in Aneinanderreihungen vorliegen. Die Aneinanderreihungen (Ketten) durchziehen das Material entlang einer Raumrichtung, nämlich entlang der Raumrichtung, in der das Material den höheren Elastizitätsmodul aufweist. Es liegen bevorzugt mehrere parallel angeordnete Aneinanderreihungen vor. Der mittlere Abstand der Aneinanderreihungen wird kleiner, wenn der Füllgrad durch magnetisierbare Teilchen zunimmt.

Das zellige Elastomer enthält bevorzugt zwischen 1 und 95 Gew.-%, bevorzugt zwischen 10 und 75 Gew.-%, magnetisierbare Teilchen, bezogen auf das Gesamtgewicht des zelligen Elastomers enthaltend die magnetisierbaren Teilchen.

Das erfindungsgemäße Verfahren zur Herstellung von anisotropen zelligen Elastomeren, bevorzugt zelligen Polyurethanelastomeren mit einer Dichte nach DIN EN ISO 845 zwischen 300 kg/m³ und 5000 kg/m³, wobei sich die Dichte auf das Gesamtgewicht des zelligen Polyurethanelastomers bezieht, d. h. inklusive des Gewichts der magnetisierbaren oder magnetischen Teilchen, ist dadurch gekennzeichnet, dass man die zelligen Ela-stomere in Gegenwart von magnetisierbaren Teilchen herstellt, so dass diese magnetisierbaren Teilchen in dem zelligen Elastomer vorliegen, und die Herstellung der zelligen Elastomere in Gegenwart eines Magnetfeldes durchführt, das eine Flussdichte von größer als 0,01 Tesla, bevorzugt mit einer Flussdichte zwischen 0,1 und 2 Tesla beträgt.

Dabei wird die Herstellung bevorzugt in einer Form durchgeführt, besonders bevorzugt wird man in einer Form durch Umsetzung von (a) Isocyanaten mit (b) gegenüber Isocyanaten reaktiven Verbindungen zellige Polyurethanelastomere herstellen, wobei in mindestens einer der Ausgangskomponenten, d. h. (a) und/oder (b), magnetisierbare Teilchen enthaltend sind. Als Isocyanate können bevorzugt auch Prepolymere eingesetzt werden, die Isocyanatgruppen aufweisen.

Dabei ist das Volumen der Form von einem Magnetfeld erfüllt, dessen Feldlinien entlang der Raumrichtung verlaufen, in der das zellige Elastomer einen größeren Elastizitätsmodul aufweisen soll. Das magnetische Feld kann mittels Permanentmagneten oder Elektromagneten erzeugt werden. Die Herstellung von kompakten Elastomeren in Gegenwart eines Magnetfeldes ist in Ginder et al., Magnetorheological Elastomers: Properties and Applications, SPIE Vol. 3675, pp131, der WO 2006/024457 und in der US 2005/0116194 A1 beschrieben.

Wenn das Magnetfeld mittels Permanentmagneten erzeugt wird, werden zwei Permanentmagnete bevorzugt derart angeordnet, dass der Nordpol des einen Magneten und der Südpol des anderen Magneten dem Forminnenraum zugewandt ist. Die Magnete befinden sich bevorzugt in den Formwänden oder auch außerhalb der Formwände. Als Materialien für die Permanentmagnete kommen alle ferro- oder ferrimagnetischen Substanzen in Frage, bevorzugt ferromagnetische Metalle, insbesondere bevorzugt werden Neodym-Eisen-Bor Verbindungen verwendet, die eine besonders hohe permanente Magnetisierung erlauben. Derartige Magnete sind beispielsweise erhältlich bei dem Internetversand supermagnete.de. Die Permanentmagnete befinden sich entweder schon vor der Befüllung der Form in den Formwänden oder außerhalb der Formwände oder sie werden erst nach dem Befüllen der Form, aber bevor die Verfestigung nennenswert fortgeschritten ist, in ihre Positionen gebracht.

Bei Verwendung von Elektromagneten ist üblicherweise ein Joch aus ferro- oder ferrimagnetischem Material, bevorzugt weichmagnetischem Eisen, von einem elektrischen Leiter umwickelt. Das Joch dient zur Verstärkung der magnetischen Flussdichte und dazu, das magnetische Feld zu leiten. Die Polschuhe des Jochs sind in die Wände der Form eingelassen oder befinden sich außerhalb der Form und die Form dazwischen in dem mit magnetischem Feld erfüllten Raum. Das vom Elektromagneten erzeugte Magnetfeld wird entweder schon vor dem Befüllen der Form oder bevorzugt nach dem Befüllen, aber bevor die Verfestigung nennenswert fortgeschritten ist, eingeschaltet.

Eine weitere Möglichkeit zur Erzeugung des Magnetfeldes besteht in der Kombination von Permanent- und Elektromagneten. Das Feld der Permanentmagnete kann durch einen Elektromagneten kompensiert werden, um einen feldfreien Zustand, z. B. beim Befüllen der Form, zu erzielen, andererseits kann das Feld der Permanentmagnete durch den Elektromagneten verstärkt werden, um die benötigten magnetischen Flussdichten, insbesondere bei großen Querschnitten des zelligen Elastomeren in Richtung der Magnetfeldlinien, erzielen zu können.

Eine spezielle Ausführung der Kombination Form/Magnet besteht in einem Magnetaufbau (Elektro- oder Permanentmagnet oder Kombination aus beiden) im Bereich einer Form-Befüllungseinrichtung (z. B. Mischkopf) und einer Taktstrasse oder einem Karussell von Formen, die eine nach der anderen dem Magnetfeld ausgesetzt werden.

Das Design der Permanentmagnete bzw. des Elektromagneten kann bevorzugt der gewünschten Geometrie des zelligen Elastomeren und den gewünschten mechanischen Eigenschaften angepasst werden.

Das Magnetfeld wird bevorzugt mindestens so lange aufrecht erhalten bis das Elastomer hinreichend weit ausgehärtet ist und die magnetisierbaren Teilchen in ihrer Anordnung fixiert sind.

Als Material der Form kann ein unmagnetisches Material wie Aluminium gewählt werden, um das Magnetfeld, erzeugt durch die Permanent- und/oder Elektromagnete, nicht zu stören, andererseits kann zumindest in einigen Bereichen gezielt ein magnetisches Material eingesetzt werden, um das magnetische Feld, erzeugt durch die Permanent- und/oder Elektromagnete, in optimaler Weise zu beeinflussen.

Wie eingangs dargestellt sind Verfahren zur Herstellung von zelligen Polyurethanelastomeren allgemein bekannt. Bevorzugt kann dabei die Herstellung in einem zweistufigen Verfahren erfolgen, besonders bevorzugt kann man in der ersten Stufe durch Umsetzung von (a) Isocyanat mit (b) gegenüber Isocyanaten reaktiven Verbindungen und gegebenenfalls Kettenverlängerung- und/oder Vernetzungsmitteln (c) ein Isocyanatgruppen aufweisendes Prepolymer herstellen und dieses Prepolymer in der zweiten Stufe in einer Form mit einer Vernetzerkomponente enthaltend (d) Wasser sowie gegebenenfalls (e) Katalysatoren, (f) Treibmittel und/oder (g) Hilfsmittel zu einem zelligen Polyurethanelastomeren umsetzen, wobei in dem Prepolymer und/oder der Vernetzerkomponente, bevorzugt dem Prepolymer, magnetisierbare Teilchen enthaltend sind.

Im Folgenden soll die Herstellung der bevorzugten Polyurethanelastomere beispielhaft näher beschrieben werden.

Die Herstellung erfolgt üblicherweise durch Umsetzung von Isocyanaten mit gegenüber Isocyanaten reaktiven Verbindungen. Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei solche in Frage, die aufgrund ihrer Form die erfindungsgemäße dreidimensionale Form des Federelements gewährleisten. Bei dem Formmaterial kann bevorzugt die Wechselwirkung mit dem Magnetfeld berücksichtigt werden, wie oben ausgeführt. Das erfindungsgemäße Verfahren zur Herstellung der zelligen Elastomere kann bevorzugt derart erfolgen, dass man in einem ein- oder zweistufigen Prozess die folgenden Ausgangsstoffe einsetzt:
(a) Isocyanat,
(b) gegenüber Isocyanaten reaktive Verbindung,
(d) Wasser,
   und gegebenenfalls
(e) Katalysatoren,
(f) Treibmittel und/oder
(g) Hilfsstoffe,
wobei man einer oder mehreren der genannten Komponenten die erfindungsgemäßen magnetisierbaren Teilchen zugibt.

Falls das zellige Polyurethanelastomer in einem zweistufigen Verfahren hergestellt wird, wobei in der ersten Stufe ein Isocyanatgruppen aufweisendes Prepolymer hergestellt wird, wird man die eingangs dargestellten magnetisierbaren Teilchen bevorzugt dem Prepolymer zugeben und bevorzugt darin durch Rühren, Schütteln oder andere Mischverfahren möglichst homogen dispergieren. Dann wird das Prepolymer mit den magnetisierbaren Teilchen in einer zweiten Stufe mit der Vernetzerkomponente zu einem zelligen Polyurethanelastomeren umgesetzt.

Falls das zellige Polyurethanelastomer nicht in einem zweistufigen Verfahren hergestellt wird, wird man die eingangs dargestellten magnetisierbaren Teilchen bevorzugt der Komponente (b) oder Teilen der Komponente (b) zugeben, wobei in der Komponente (b) bevorzugt schon Komponenten (d), (e), (f) und (g) enthalten sind. Die magnetischen Teilchen werden in der Komponente (b) bevorzugt durch Rühren, Schütteln oder andere Mischverfahren möglichst homogen dispergiert. Dann wird Komponente (a), ggf. auch schon enthaltend Komponenten (f) und (g), zugemischt.

Bevorzugt wird die Herstellung der erfindungsgemäßen zelligen Polyisocyanat-Polyadditionsprodukte in einer Form bei einer Oberflächentemperatur der Forminnenwand von 50 bis 100 °C, bevorzugt 75 bis 90 °C durchgeführt. Unter dem Begriff "Oberflächentemperatur der Forminnenwand" ist dabei die Temperatur zu verstehen, die die Oberfläche der Innenwand der Form, d. h. die Oberfläche der Form, die üblicherweise mit dem Reaktionssystem bei der Herstellung der Formteile in Kontakt steht, bei der Herstellung der Formteile zumindest kurzzeitig, bevorzugt mindestens 10 min, aufweist.

Die Herstellung der Formteile wird bevorzugt bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden.

Die Formteile sind üblicherweise nach 5 bis 40 Minuten ausgehärtet und damit entformbar.

Die Menge des in das Formwerkzeug eingebrachten Reaktionsgemisches wird üblicherweise so bemessen, dass die erhaltenen Formkörper die bereits dargestellte Dichte aufweisen. Die erfindungsgemäß erhältlichen zelligen Polyisocyanat-Polyadditionsprodukte weisen bevorzugt eine Dichte nach DIN 53420 von 200 bis 5000 kg/m³, besonders bevorzugt 300 bis 2000 kg/m³ auf, wobei sich die Dichte auf das Gesamtgewicht des zelligen Polyurethanelastomers bezieht, d. h. inklusive des Gewichts der magnetisierbaren oder magnetischen Teilchen.

Die Ausgangskomponenten werden üblicherweise mit einer Temperatur von 15 bis 120 °C, vorzugsweise von 30 bis 110 °C, in das Formwerkzeug eingebracht. Die Verdichtungsgrade zur Herstellung der Formkörper liegen zwischen 1,1 und 8, vorzugsweise zwischen 2 und 6.

Die erfindungsgemäßen zelligen Polyisocyanat-Polyadditionsprodukte werden zweckmäßigerweise nach dem "one-shot"-Verfahren mit Hilfe der Niederdruck-Technik oder im Hochdruckverfahren oder insbesondere der bekannten Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt.

Bei Verwendung einer Mischkammer mit mehreren Zulaufdüsen können die Ausgangskomponenten einzeln zugeführt und in der Mischkammer intensiv vermischt werden. Als vorteilhaft hat es sich erwiesen, nach dem Zweikomponenten-Verfahren zu arbeiten.

Nach einer besonders vorteilhaften Ausführungsform wird in einem zweistufigen Prozess zunächst ein NCO-gruppenhaltiges Prepolymer hergestellt. Dazu wird die Komponente (b) und gegebenenfalls Kettenverlängerer (c), z. B. Butandiol mit (a) im Überschuss üblicherweise bei Temperaturen von 80 °C bis 160 °C, vorzugsweise von 110 °C bis 150 °C, zur Reaktion gebracht. Die Reaktionszeit ist auf das Erreichen des theoretischen NCO-Gehaltes bemessen. Das Isocyanatgruppen ausweisende Prepolymer weist bevorzugt einen NCO-Gehalt zwischen 1 Gew.-% und 30 Gew.-% auf, bevorzugt 2 Gew.-% bis 14 Gew.-% und insbesondere 3 Gew.-% bis 10 Gew.-%.

Die Hilfs- und/oder Zusatzstoffe (g) können bevorzugt in der Vernetzerkomponente enthalten sein. Bevorzugt wird als Hilfs- und Zusatzstoffe (g) in der Vernetzerkomponente mindestens ein allgemein bekanntes Carbodiimid als Hydrolyseschutz eingesetzt, beispielsweise 2,2',6,6'-Tetraisopropyldiphenylcarbodiimid, Schaumstabilisatoren wie Silikonöle oder oberflächenaktive Substanzen zur Verbesserung der Homogenität der Reaktionsmischung.

Zur Verbesserung der Entformung der erfindungsgemäß hergestellten Formkörper hat es sich als vorteilhaft erwiesen, die Formwerkzeuginnenflächen zumindest zu Beginn einer Produktionsreihe mit üblichen äußeren Formtrennmitteln, beispielsweise auf Wachs- oder Silikonbasis oder insbesondere mit wässrigen Seifenlösungen, zu beschichten.

Die Entformzeiten betragen in Abhängigkeit von der Größe und Geometrie des Formteils durchschnittlich 5 bis 40 Minuten.

Nach der Herstellung der Formteile in der Form können die Formteile bevorzugt für eine Dauer von 1 bis 48 Stunden bei Temperaturen von üblicherweise von 70 bis 140 °C getempert werden.

Zu den weiteren Ausgangskomponenten kann folgendes ausgeführt werden:
Als Isocyanate (a) können allgemein bekannte (cyclo)aliphatische und/oder aromatische Polyisocyanate eingesetzt werden. Zur Herstellung der erfindungsgemäßen Verbundelemente eignen sich besonders aromatische Diisocyanate, vorzugsweise 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyl-diisocyanat (Tolidine diisocyanate (TODI)), 1,2-Diphenylethandiisocyanat, p-Phenylendiisocyanat und/oder (cyclo)aliphatische Isocyanat wie z.B. 1,6-Hexamethylendiisocyanat, 1-Isocyanato-3,3,5-trimethyl-5-isocyanatomethylcyclohexan und/oder Polyisocyanate wie z. B. Polyphenylpolymethylenpolyisocyanate. Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden. Bevorzugt werden gegebenenfalls modifiziertes 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), (Tolidine diisocyanate (TODI)), und/oder Mischungen dieser Isocyanate eingesetzt.

Als gegenüber Isocyanaten reaktive Verbindungen (b) allgemein bekannte Polyhydroxylverbindungen eingesetzt werden, bevorzugt solchen mit einer Funktionalität gegenüber Isocyanatgruppen von 2 bis 3 und bevorzugt einem Molekulargewicht von 60 bis 6000, besonders bevorzugt 500 bis 6000, insbesondere 800 bis 3500. Bevorzugt werden als (b) allgemein bekannte Polyetherpolyole, Polyesterpolyole, Polyetheresterpolyole und/oder hydroxylgruppenhaltige Polycarbonate eingesetzt. Besonders bevorzugt werden Polyesterpolyole, Polytetrahydrofuran (PTHF) und Polypropylenglykol (PPG) eingesetzt.

Geeignete Polyesterpolyole können beispielsweise aus Dicarbonsäuren mit 2 bis 12 Kohlenstoffatomen und zweiwertigen Alkoholen hergestellt werden. Als Dicarbonsäuren kommen beispielsweise in Betracht: Adipinsäure, Phthalsäure, Maleinsäure. Beispiele für zweiwertige Alkohole sind Glykole mit 2 bis 16 Kohlenstoffatomen, vorzugsweise 2 bis 6 Kohlenstoffatome, wie z. B. Ethylenglykol, Diethylenglykol, Butandiol-1,4, Pentandiol-1,5, Hexandiol-1,6, Decandiol-1,10, Propandiol-1,3 und Dipropylenglykol. Je nach den gewünschten Eigenschaften können die zweiwertigen Alkohole allein oder gegebenenfalls in Mischungen untereinander verwendet werden. Als Polyesterpolyole vorzugsweise verwendet werden Ethandiol-polyadipate, 1,4-Butandiol-polyadipate, Ethandiol-butandiol-polyadipate, 1,6-Hexandiol-neopentylglykol-polyadipate, 1,6-Hexandiol-1,4-Butandiol-polyadipate, und/oder Polycaprolactone.

Geeignete estergruppenhaltige Polyoxyalkylenglykole, im wesentlichen Polyoxytetramethylenglykole, sind Polykondensate aus organischen, vorzugsweise aliphatischen Dicarbonsäuren, insbesondere Adipinsäure mit Polyoxymethylenglykolen des zahlenmittleren Molekulargewichtes von 162 bis 600 und gegebenenfalls aliphatischen Diolen, insbesondere Butandiol-1,4. Ebenfalls geeignete estergruppenhaltige Polyoxytetramethylenglykole sind solche aus der Polykondensation mit ε-caprolacton gebildete Polykondensate. Geeignete carbonatgruppenhaltige Polyoxyalkylenglykole, im wesentlichen Polyoxytetramethylenglykole, sind Polykondensate aus diesen mit Alkyl- bzw. Arylcarbonaten oder Phosgen.

Beispielhafte Ausführungen zu der Komponente (b) sind in DE-A 195 48 771, Seite 6, Zeilen 26 bis 59 gegeben.

Zusätzlich zu den bereits beschriebenen gegenüber Isocyanaten reaktiven Komponenten können des weiteren Kettenverlängerungs- und/oder Vernetzungsmitteln (c) mit einem Molekulargewicht von kleiner 500, bevorzugt 60 bis 499 eingesetzt werden, beispielsweise ausgewählt aus der Gruppe der di- und/oder trifunktionellen Alkohole, dibis tetrafunktionellen Polyoxyalkylen-polyole und der alkylsubstituierten aromatischen Diamine oder von Mischungen aus mindestens zwei der genannten Kettenverlängerungs- und/oder Vernetzungsmittel. Als (c) können beispielsweise Alkandiole mit 2 bis 12, bevorzugt 2, 4, oder 6 Kohlenstoffatomen verwendet werden, z. B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, Dialkylenglykole mit 4 bis 8 Kohlenstoffatomen, wie z. B. Diethylenglykol und Dipropylenglykol und/oder di- bis tetrafunktionelle Polyoxyalkylen-polyole. Geeignet sind jedoch auch verzweigtkettige und/oder ungesättigte Alkandiole mit üblicherweise nicht mehr als 12 Kohlenstoffatomen, wie z. B. 1,2-Propandiol, 2-Methyl-, 2,2-Dimethyl-propandiol-1,3, 2-Butyl-2-ethylpropandiol-1,3, Buten-2-diol-1,4 und Butin-2-diol-1,4, Diester der Terephthalsäure mit Glykolen mit 2 bis 4 Kohlenstoffatomen, wie z. B. Terephthalsäure-bis-ethylenglykol- oder -butandiol, 1,4, Hydroxyalkylenether des Hydrochinons oder Resorcins, wie z. B. 1,4-Di-(b-hydroxyethyl)-hydrochinon oder 1,3-Di(b-hydroxyethyl)-resorcin, Alkanolamine mit 2 bis 12 Kohlenstoffatomen, wie z. B. Ethanolamin, 2-Aminopropanol und 3-Amino-2,2-dimethylpropanol, N-Alkyldialkanolamine, wie z. B. N-Methyl- und N-Ethyl-diethanolamin. Als höherfunktionelle Vernetzungsmittel (c) seien beispielsweise tri- und höherfunktionelle Alkohole, wie z. B. Glycerin, Trimethylolpropan, Pentaerythrit und Trihydroxycyclohexane sowie Trialkanolamine, wie z. B. Triethanolamin genannt.

Als Kettenverlängerungsmittel vorzüglich bewährt haben sich und daher bevorzugt verwendet werden alkylsubstituierte aromatische Polyamine mit Molekulargewichten vorzugsweise von 122 bis 400, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, bevorzugt mindestens difunktionellen Verbindungen (b) unter den Verarbeitungsbedingungen zumindest teilweise, vorzugsweise jedoch vollständig mischbar sind. Zur Herstellung der erfindungsgemäßen Formkörper können die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diamino-diphenylmethane sowie Gemische aus den genannten tetraalkylsubstituierten 4,4'-Diamino-diphenylmethanen und DETDA verwendet werden.

Zur Erzielung spezieller mechanischer Eigenschaften kann es auch zweckmäßig sein, die alkylsubstituierten aromatischen Polyamine im Gemisch mit den vorgenannten niedermolekularen mehrwertigen Alkoholen, vorzugsweise zwei- und/oder dreiwertigen Alkoholen oder Dialkylenglykolen zu verwenden.

Bevorzugt wird die Herstellung der zelligen Polyisocyanat-Polyadditionsprodukte in Gegenwart von Wasser (d) durchgeführt. Das Wasser wirkt sowohl als Vernetzer unter Bildung von Harnstoffgruppen als auch aufgrund der Reaktion mit Isocyanatgruppen unter Bildung von Kohlendioxid als Treibmittel. Aufgrund dieser doppelten Funktion wird es in dieser Schrift getrennt von (c) und (f) aufgeführt. Per Definition enthalten die Komponenten (c) und (f) somit kein Wasser, das per Definition ausschließlich als (d) aufgeführt wird. Die Wassermengen, die zweckmäßigerweise verwendet werden können, betragen 0,01 bis 5 Gew.-%, vorzugsweise 0,3 bis 3,0 Gew.-%, bezogen auf das Gewicht der Komponente (b), bestimmt vor Zugabe magnetisierbarer Teilchen.

Zur Beschleunigung der Reaktion können dem Reaktionsansatz sowohl bei der Herstellung eines Prepolymeren als auch gegebenenfalls bei der Umsetzung eines Prepolymeren mit einer Vernetzerkomponente allgemein bekannte Katalysatoren (e) zugefügt werden. Die Katalysatoren (e) können einzeln wie auch in Abmischung miteinander zugegeben werden. Vorzugsweise sind dies metallorganische Verbindungen, wie Zinn-(II)-Salze von organischen Carbonsäuren, z. B. Zinn-(II)-dioctoat, Zinn-(II)-dilaurat, Dibutylzinndiacetat und Dibutylzinndilaurat und tertiäre Amine wie Tetramethylethylendiamin, N-Methylmorpholin, Diethylbenzylamin, Triethylamin, Dimethylcyclohexylamin, Diazabicyclooctan, N,N'-Dimethylpiperazin, N-Methyl,N'-(4-N-Dimethylamino-) Butylpiperazin, N,N,N',N",N"-Pentamethyldiethylendiamin oder ähnliche. Weiterhin kommen als Katalysatoren in Betracht: Amidine, wie z. B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z. B. Tetramethylammoniumhydroxid, Alkalihydroxide, wie z. B. Natriumhydroxid, und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen. Je nach einzustellender Reaktivität gelangen die Katalysatoren (e) in Mengen von 0,001 bis 0,5 Gew.-%, bezogen auf das Gewicht des Prepolymers vor Zugabe der magnetisierbaren Teilchen, zur Anwendung.

Gegebenenfalls können in der Polyurethanherstellung übliche Treibmittel (f) verwendet werden. Geeignet sind beispielsweise niedrig siedende Flüssigkeiten, die unter dem Einfluss der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z. B. Methylenchlorid und Dichlormonofluormethan, per- oder partiell fluorierte Kohlenwasserstoffe, wie z. B. Trifluormethan, Difluormethan, Difluorethan, Tetrafluorethan und Heptafluorpropan, Kohlenwasserstoffe, wie z. B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z. B. Dimethylether, Diethylether und Furan, Carbonsäureester, wie z. B. Methyl- und Ethylformiat, Ketone, wie z. B. Aceton, und/oder fluorierte und/oder perfluorierte, tertiäre Alkylamine, wie z. B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden. Die zweckmäßigste Menge an niedrigsiedender Flüssigkeit zur Herstellung derartiger zellhaltiger elastischer Formkörper aus Harnstoffgruppen gebunden enthaltenden Elastomeren hängt ab von der Dichte, die man erreichen will, sowie von der Menge des bevorzugt mit verwendeten Wassers. Im allgemeinen liefern Mengen von 1 bis 15 Gew.-%, vorzugsweise 2 bis 11 Gew.-%, bezogen auf das Gewicht der Komponente (b), bestimmt vor Zugabe magnetisierbarer Teilchen, zufriedenstellende Ergebnisse. Besonders bevorzugt wird ausschließlich Wasser (d) als Treibmittel eingesetzt.

Bei der Herstellung der Formteile können Hilfsstoffe (g) eingesetzt werden. Dazu zählen beispielsweise allgemein bekannte oberflächenaktive Substanzen, Schaumstabilisatoren, Zellregler, Füllstoffe, Flammschutzmittel, Keimbildungsmittel, Oxidationsverzögerer, Stabilisatoren, Gleit- und Entformungshilfsmittel, Farbstoffe und Pigmente.

Als oberflächenaktive Substanzen kommen z. B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie z. B. die Natriumsalze von Ricinusölsulfaten oder von Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinasphthylmethandisulfonsäure und Ricinolsäure; Schaumstabilisatoren, wie Siloxan-Oxalkylen-Mischpolymerisate und andere Organosiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der höhermoleklaren Polyhydroxylverbindungen (b) (ohne Berücksichtigung zugemischter magnetisierbarer Teilchen) angewandt.

Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Blähgraphit, Kollophonium, Cyclopentadienylharze und Pfropfpolymerisate. Als verstärkend wirkende Füllstoffe finden vorzugsweise Anwendung Fasern, beispielsweise Kohlefasern oder Glasfasern, besonders dann, wenn eine hohe Wärmeformbeständigkeit oder sehr hohe Steifigkeit gefordert wird, wobei die Fasern mit Haftvermittlern und/oder Schlichten ausgerüstet sein können. Die anorganischen und organischen Füllstoffe können einzeln oder als Gemische verwendet werden und werden der Reaktionsmischung üblicherweise in Mengen von 0,5 bis 50 Gew.-%, vorzugsweise 1 bis 30 Gew.-% bezogen auf das Gewicht der Aufbaukomponenten (a) bis (c), wobei das Gewicht evtl. zugemischter magnetisierbarer Teilchen nicht berücksichtigt ist, einverleibt. Geeignete Flammschutzmittel sind beispielsweise Trikresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)-ethylendiphosphat. Außer den bereits genannten halogensubstituierten Phosphaten können auch anorganische Flammschutzmittel wie roter Phosphor, Aluminiumoxidhydrat, Antimontrioxid, Arsentrioxid, Ammoniumpolyphosphat und Calciumsulfat oder Cyanursäurederivate, wie z. B. Melamin oder Mischungen aus mindestens zwei Flammschutzmitteln, wie z. B. Ammoniumphosphaten und Melamin sowie gegebenenfalls Stärke und/oder Blähgraphit zum Flammfestmachen der erfindungsgemäß hergestellten zelligen PU-Elastomere verwendet werden. Im allgemeinen hat es sich als zweckmäßig erwiesen, 5 bis 50 Gew.-Teile, vorzugsweise 5 bis 25 Gew.-Teile der genannten Flammschutzmittel oder - mischungen für jeweils 100 Gew.-Teile der Aufbaukomponenten (a) bis (c), wobei das Gewicht evtl. zugemischter magnetisierbarer Teilchen nicht berücksichtigt ist, zu verwenden.

Als Keimbildungsmittel können z. B. Talkum, Calciumfluorid, Natriumphenylphosphinat, Aluminiumoxid und feinteiliges Polytetrafluorethylen in Mengen bis zu 5 Gew.-%, bezogen auf das Gesamtgewicht der Aufbaukomponenten (a) bis (c), wobei das Gewicht evtl. zugemischter magnetisierbarer Teilchen nicht berücksichtigt ist, eingesetzt werden. Geeignete Oxidationsverzögerer und Wärmestabilisatoren, die den erfindungsgemäßen zelligen PU-Elastomeren zugesetzt werden können, sind beispielsweise Halogenide von Metallen der Gruppe I des periodischen Systems, z. B. Natrium-, Kalium-, Lithium-Halogenide, gegebenenfalls in Verbindung mit Kupfer-(I)-Halogeniden, z. B. Chloriden, Bromiden oder Jodiden, sterisch gehinderte Phenole, Hydrochinone, sowie substituierte Verbindungen dieser Gruppen und Mischungen davon, die vorzugsweise in Konzentrationen bis zu 1 Gew-% bezogen auf das Gewicht der Aufbaukomponenten (a) bis (c), verwendet werden. Beispiele für Hydrolyseschutzmittel sind verschiedene substituierte Carbodiimide, wie 2,2',6,6'-Tetraisopropyldiphenyl-carbodiimid die im allgemeinen in Mengen bis zu 2,0 Gew-%, bezogen auf das Gewicht der Aufbaukomponenten (a) bis (c), wobei das Gewicht evtl. zugemischter magnetisierbarer Teilchen nicht berücksichtigt ist, eingesetzt werden. Gleit- und Entformungsmittel, die in der Regel ebenfalls in Mengen bis zu 1 Gew-%, bezogen auf das Gewicht der Aufbaukomponenten (a) bis (c), wobei das Gewicht evtl. zugemischter magnetisierbarer Teilchen nicht berücksichtigt ist, zugesetzt werden, sind Stearinsäure, Stearylalkohol, Stearinsäureester und -amide sowie die Fettsäureester des Pentaerythrits. Ferner können organische Farbstoffe, wie Nigrosin, Pigmente, wie z. B. Titandioxid, Cadmiumsulfid, Cadmiumsulfidselenid, Phthalocyanine, Ultramarinblau oder Ruß zugesetzt werden. Ferner können Mikrobenschutzmittel und/oder organische Farbmittel zugesetzt werden.

Nähere Angaben über die oben genannten anderen üblichen Hilfs- und Zusatzstoffe sind der Fachliteratur zu entnehmen.

Durch die nachfolgenden Beispiele soll die Erfindung näher erläutert werden.

### Beispiele

### Beispiel 1: Mikrozelluläres Polyurethan auf Basis 1,5-NDI

a) Herstellung eines Isocyanatgruppen aufweisenden Prepolymers auf Basis von 1,5-NDI:
1000 Gew.-Teile eines Poly(ethandiol-(0,5 mol)-butan-1,4-diol (0,5 mol)-adipats mit einem durchschnittlichen Molekulargewicht von 2000 (errechnet aus der experimentell ermittelten Hydroxylzahl) wurden auf 140 °C erwärmt und bei dieser Temperatur mit 240 Gew.-Teilen festem NDI unter intensiven Rühren versetzt und zur Reaktion gebracht. Man erhielt ein Prepolymer mit einem NCO-Gehalt von 4,18 % und einer Viskosität bei 90 °C von 2600 mPas (gemessen mit einem Rotationsviskosimeter).
b) Vernetzerkomponente:
bestehend aus

| | |
|---|---|
| 55,0 Gew.-Teile | 50%igen wässrigen Lösung eines Fettsäuresulfonats |
| 15,8 Gew.-Teile | 2,2',6,6'-Tetraisopropyldiphenyl-carbodiimid |
| 3,5 Gew.-Teile | Gemisches von Fettsäurepolyglycolestern und Aminsalzen von Alkylbenzolsulfonaten |
| 0,4 Gew.-Teile | Mischung aus |
| | 30 Gew.-% Pentamethyl-diethylentriamin und 70 Gew.-% N-Methyl-N'-(dimethylaminoethyl)-piperazin |

### Herstellung des zelligen Elastomeren:

44,17 Gewichtsteile Carbonyleisenpulver (Gesamtmenge Eisen im Fertigteil: 30 Gew.-%) wurden auf 100 Teile des auf 90 °C vorgeheizten Prepolymer a) zugemischt, anschließend wurde die auf 50 °C vorgeheizte Vernetzerkomponente b) innig und kurz (10 sec) zugemischt. Das Mischungsverhältnis des Prepolymers inklusive Carbonyleisenpulver mit der Vernetzerkomponente beträgt 100 : 2,5 bezogen auf die Einwaagemassen. Die Systemeinwaage wurde so gewählt, dass sich eine Dichte (unter Berücksichtigung des Eisens) von ca. 580 kg/m³ ergibt. Als Carbonyleisenpulver diente der Typ EQ der BASF Aktiengesellschaft mit einem mittleren Durchmesser [d₅₀] von 2,5 bis 3,5 µm.

Das fertige System wurde in einen Messingring gegossen, der auf dem Polschuh eines Elektromagneten stand. Der Messingring erlaubt die Herstellung von scheibenförmigen Probenkörpern mit Durchmesser 31 mm und Dicke 10 mm (= Innenmaße des Messingrings). Nach dem Befüllen des Messingrings wurde der andere Polschuh von oben auf den Ring mit dem System aufgebracht und anschließend das Magnetfeld durch Einschalten des Spulenstroms aufgebaut. Der Messingring und die Polschuhe des Magneten wurden auf ca. 90 °C vorgeheizt. Das PU-System war 10 min dem Magnetfeld ausgesetzt, anschließend wurde das Magnetfeld ausgeschaltet und der Messingring mit der teilweise ausgehärteten Probe den Polschuhen entnommen und weitere 20 min bei 80 °C im Ofen getempert. Zur Vervollständigung der Reaktion wurde noch weitere 14 Stunden bei 110 °C getempert.

Der Elektromagnet besteht aus einer Spule mit 1350 Kupferwindungen, die um ein Weicheisenjoch gewickelt sind. Das Joch hat einen gleichbleibenden quadratischen Querschnitt von 4 mal 4 cm². Wenn die Polschuhe des Jochs, wie zur Herstellung der anisotropen zelligen Elastomere, etwa 10 mm Abstand haben, und ein Strom von 3 Ampere durch die Spule fließt, ergibt sich eine magnetische Flussdichte zwischen den Polschuhen von 0,29 Tesla (gemessen bei leerem Spalt).

Die Charakterisierung der fertigen Proben mit dem Rasterelektronenmikroskop zeigt deutlich kettenförmige Strukturen der Carbonyleisenteilchen entlang der Raumrichtung in der die Magnetfeldlinien orientiert waren. Der Druckmodul des derart hergestellten Materials bestimmt in Anlehnung an DIN ISO 7743 (die Abweichungen vom in der Norm beschriebenen Verfahren werden vorstehend in der Beschreibung erläutert) beträgt entlang der Orientierungsrichtung der Eisenpartikel 18 MPa und in den beiden Raumrichtungen senkrecht dazu 0,7 MPa. D. h. in Kompression beträgt die Anisotropie des Elastizitätsmoduls 18 : 0,7 = 25,7.

### Weitere Eigenschaften des Materials:

Das Elastomer nach Beispiel 1 zeigt auch in Dehnung eine deutliche Anisotropie im Elastizitätsmodul, d. h. es zeigt eine Anisotropie im Zugmodul. Der Zugmodul kann nach dem gleichen Verfahren bestimmt werden wie der Druckmodul, d. h. nach dem oben beschriebenen Verfahren in Anlehnung an DIN ISO 7743. Dadurch dass die Probekörper mit den Platten der Prüfmaschine verklebt werden, können auch Zugbelastungen aufgebracht werden.

Der Zugmodul parallel zu der Orientierungsrichtung der Carbonyleisenteilchen beträgt 10 MPa, senkrecht zur Orientierungsrichtung 0,7 MPa. D. h. in Zugbelastung beträgt die Anisotropie des Elastizitätsmoduls 10 : 0,7 = 14,3 und ist damit kleiner als in Druckbelastung.

Bei zyklischer Druck- oder Zugbelastung des Materials zeigt sich parallel zur Orientierungsrichtung der Eisenteilchen ein deutlich stärker ausgeprägtes Hystereseverhalten als in senkrechter Orientierung. Bei einer Deformationsgeschwindigkeit von 30 mm/min und einer Maximaldeformation von 7 % beträgt die dissipierte Energie pro Einheitsvolumen pro Be- und Entlastungszyklus bei paralleler Orientierung 9400 J/m³ in Kompression und 3700 J/m³ in Dehnung. Bei senkrechter Orientierung beträgt die dissipierte Energie pro Einheitsvolumen 175 J/m³ in Kompression und 190 J/m³ in Dehnung. Die Probekörper waren zylindrisch, mit 4 mm Höhe und 9 mm Durchmesser.

Das Material zeigt magnetorheologische Eigenschaften, d. h. bei Anlegen eines Magnetfeldes parallel zur Orientierungsrichtung der Carbonyleisenteilchen und des Magnetfeldvektors nimmt der komplexe Schubmodul, gemessen in oszillatorischer Scherung bei Frequenzen zwischen 0,1 und 10 Hz, zu. Die Orientierungsrichtung der Carbonyleisenteilchen entspricht der Richtung des Schergradienten. Die Zunahme des Schubmoduls ist reversibel, d. h. bei Abschaltung des Magnetfeldes geht der Modul wieder auf seinen Ausgangswert zurück. Die Größe des relativen magnetorheologischen Effektes beim Speichermodul G' beträgt 8 % bei einer Scherfrequenz von 1 Hz und einer Scheramplitude von 0,1 %. Magnetorheologische Effekte bei kompakten Elastomeren, sogenannten Magnetorheologische Elastomeren, und ihre Messung sind z. B. in WO 2006/024457 A1 beschrieben.

Das Material zeigt eine höhere spezifische elektrische Leitfähigkeit parallel zu den kettenförmigen Strukturen der Carbonyleisenteilchen als senkrecht dazu. Darüber hinaus findet man bei zunehmendem Kompressionsdruck zunächst eine Zunahme der spezifischen Leitfähigkeit und dann, nach Durchlaufen eines Maximums, wieder eine Abnahme. Dieses Verhalten findet sich sowohl bei Messung parallel als auch senkrecht zur Orientierungsrichtung der Carbonyleisenteilchen. Das Maximum in der druckabhängigen spez. Leitfähigkeit, gemessen bei einer Spannung von U = 10 Volt, liegt für parallele Orientierung bei ca. 10⁻⁶ S/cm und ca. 6 bar, für senkrechte Orientierung bei ca. 2·10⁻¹⁰ S/cm und ca. 5 bar.

Das Material zeigt zusätzlich zur Orientierung der Eisenpartikeln in kettenförmigen Strukturen auch eine Anisotropie in der Zellmorphologie. Die Schaumzellen sind auch in kettenförmigen Strukturen angeordnet, das bedeutet, die Zellwände, die parallel zur Richtung des bei der Präparation angelegten Magnetfeldes orientiert sind, bilden annähernd durchgängige Wände. Die Zellwände, die senkrecht zur Richtung des bei der Präparation angelegten Magnetfeldes orientiert sind, sind eher zufällig angeordnet. Diese Anisotropie in der Zellmorphologie ist auf die durch Wechselwirkung des Magnetfeldes und der magnetisierbaren Teilchen hervorgerufenen Fließvorgänge bei der Schaumbildung zurückzuführen.

Nicht erfindungsgemäße Vergleichsbeispiele:
Vergleichsbeispiel 2: Rezeptur wie Beispiel 1, aber ohne Zugabe von Carbonyleisenpulver und ohne Anlegen eines Magnetfeldes bei der Polymerisation.
Vergleichsbeispiel 3: Rezeptur wie Beispiel 1, aber ohne Zugabe von Carbonyleisenpulver. Es wurde ein Magnetfeld wie oben beschrieben angelegt.
Vergleichsbeispiel 4: Rezeptur wie Beispiel 1, inklusive Carbonyleisenpulver, aber ohne Anlegen eines Magnetfeldes bei der Polymerisation.

Die folgende Tabelle zeigt die mechanische Anisotropie in Kompression der o. g. Beispielmaterialien 1 bis 4:

| | 0 Gew.-% Eisen | 30 Gew.-% Eisen |
|---|---|---|
| B = 0 Tesla | Vergleichsbeispiel 2 | Vergleichsbeispiel 4 |
| | 0,6 MPa : 0,6 MPa = 1 | 0,8 MPa. : 0,8 MPa = 1 |
| B = 0,29 Tesla | Vergleichsbeispiel 3 | Beispiel 1 |
| | 0,6 MPa : 0,6 MPa = 1 | 18 MPa : 0,7 MPa = 25,7 |

Nur bei Verwendung von magnetisierbaren Teilchen und eines Magnetfeldes bei der Herstellung erhält man die Anisotropie im Druckmodul.

### Beispiel 5: Mikrozelluläres Polyurethan auf Basis MDI

a) Herstellung eines Isocyanatgruppen aufweisenden Prepolymers auf Basis von MDI
57,0 Gew.-Teile Polytetrahydrofuran 2000 (PolyTHF^{®} 2000 der BASF Aktiengesellschaft) und 14,3 Gew.-Teile Polytetrahydrofuran 1000 (PolyTHF^{®} 1000 der BASF Aktiengesellschaft) sowie 0,2 Gew.-Teile Schaumstabilisator auf Silikonbasis (DC 193 der Firma Dow Corning) wurden in einem Dreihalskolben unter Stickstoffatmosphäre auf 140 °C erwärmt und unter Rühren mit 28,5 Gew.-Teile 4,4'-Diisocyanato-diphenylmethan (Lupranat^{®} MES der BASF Aktiengesellschaft) versetzt. Die Reaktionstemperatur wurde zur vollständigen Umsetzung und zum Aufbau von Allophanat für 10 min bei 145 °C gehalten und anschließend abgekühlt. Es resultierte eine fast farblose Flüssigkeit mit einem NCO-Gehalt von 5,7 %, einem Allophanatgehalt von 0,2 % und einer Viskosität von 1600 mPas bei 80 °C.
b) Vernetzerkomponente:
bestehend aus

| | |
|---|---|
| 74,1 Gew.-Teile | 50%-ige wässrigen Lösung eines Fettsäuresulfates |
| 24,6 Gew.-Teile | Nichtionischer Emulgator Polyethylenglycol (PEG-40) Sorbit Hexaoleat |
| 0,4 Gew.-Teile | Di-n-octylzinn bis (2-ethylhexlthioglycolat) |
| 0,9 Gew.-Teile | Mischung aus Lupragen^{®} N 202 (BASF Aktiengesellschaft) und Niax^{®} catalyst E-A-1 (GE Silicones) Katalysatoren |

c) Herstellung des zylindrischen Formkörpers
44,73 Gewichtsteile Carbonyleisenpulver (Gesamtmenge Eisen im Fertigteil: 30 %) wurden auf 100 Teile des auf 90 °C vorgeheizten Prepolymer a) zugemischt und anschließend mit der auf 35 °C vorgeheizte Vernetzerkomponente b) innig gemischt. Das Mischungsverhältnis des Prepolymers inklusive Carbonyleisenpulver mit der Vernetzerkomponente beträgt 100 : 3,0 bzgl. der Einwaagemassen. Die Systemeinwaage wurde so gewählt, dass sich eine Dichte von ca. 560 kg/m³ ergibt (unter Berücksichtigung des Eisens). Als Carbonyleisenpulver diente der Typ EQ der BASF Aktiengesellschaft mit einem mittleren Durchmesser [d₅₀] von 2,5 bis 3,5 µm.

Die Mischung wurde in ein auf 75 °C temperiertes, verschließbares Formwerkzeug eingebracht. Die Form erlaubt die Herstellung von scheibenförmigen Probekörpern mit Durchmesser 31 mm und Dicke 10 mm. Im Boden und im Deckel der Form sind quaderförmige Dauermagnete ("Kollosse" vom Internetversand supermagnete.de) eingelassen. Die Magnete haben eine quadratische Grundfläche von 4 mal 4 cm². Der Abstand der Magnete beträgt bei geschlossener Form 12 mm und die resultierende magnetische Flussdichte im Zwischenraum ca. 0,6 Tesla (gemessen bei leerer Form). Abgesehen von den Magneten besteht die Form aus nichtmagnetischen Metallen (Aluminium und Messing). Das PU-System wurde bei geöffneter Form auf den Boden der Form gegossen, hinter dem sich der eine Magnet befindet. Dann wurde die Form zugeklappt und somit der zweite Magnet in Position gebracht und das Magnetfeld zum Ausrichten der Eisenpartikel entlang der Scheibenachse aufgebaut.

Die Mischung wurde in der beschriebenen Magnetform für 10 min ausgehärtet. Der so gefertigte Formkörper wurde in der Form in einen Ofen zur Vervollständigung der Reaktion für 20 min bei 80 °C gelagert. Nach Entformung des mikrozellulären Produktes wurde das Formteil 14 Stunden bei 110 °C thermisch nachgehärtet.

Die Charakterisierung der fertigen Proben mit dem Rasterelektronenmikroskop zeigt deutlich kettenförmige Strukturen der Carbonyleisenteilchen entlang der Raumrichtung, in der die Magnetfeldlinien orientiert waren. Der Druckmodul des derart hergestellten Materials bestimmt in Anlehnung an DIN ISO 7743 (die Abweichungen vom in der Norm beschriebenen Verfahren werden oben in der Beschreibung erläutert) beträgt entlang der Orientierungsrichtung der Eisenpartikel 15 MPa und in den beiden Raumrichtungen senkrecht dazu 0,9 MPa. D. h. in Kompression beträgt die Anisotropie des Elastizitätsmoduls 15 : 0,9 = 16,7.

Nicht erfindungsgemäße Vergleichsbeispiele:
Vergleichsbeispiel 6: Rezeptur wie Beispiel 5, aber ohne Zugabe von Carbonyleisenpulver und ohne Anlegen eines Magnetfeldes bei der Polymerisation.
Vergleichsbeispiel 7: Rezeptur wie Beispiel 5, aber ohne Zugabe von Carbonyleisenpulver. Es wurde ein Magnetfeld wie oben beschrieben angelegt.
Vergleichsbeispiel 8: Rezeptur wie Beispiel 5, inklusive Carbonyleisenpulver, aber ohne Anlegen eines Magnetfeldes bei der Polymerisation.

Die folgende Tabelle zeigt die mechanische Anisotropie in Kompression der o. g. Beispielmaterialien 5 bis 8:

| | 0 Gew.-% Eisen | 29 Gew.-% Eisen |
|---|---|---|
| B = 0 Tesla | Beispiel 6: | Beispiel 8: |
| | 0,8 MPa : 0,8 MPa = 1 | 1,0 MPa: 1,0 MPa = 1 |
| B = 0,35 Tesla | Beispiel 7: | Beispiel 5: |
| | 0,8 MPa : 0,8 MPa = 1 | 15 MPa : 0,9 MPa = 16,7 |

Nur bei Verwendung von magnetisierbaren Teilchen und eines Magnetfeldes bei der Herstellung erhält man die Anisotropie im Druckmodul.

## Patentansprüche

1. Zelliges Elastomer, **dadurch gekennzeichnet, dass** das zellige Elastomer anisotrop ist, wobei die Anisotropie dadurch definiert ist, dass der Druckmodul in einer von 3 orthogonalen Richtungen mindestens um einen Faktor 1,5 größer ist als in den anderen beiden Richtungen.

2. Zelliges Elastomer, **dadurch gekennzeichnet, dass** das zellige Elastomer magnetisierbare Teilchen enthält, die eine kettenförmige Ausrichtung entlang einer Raumrichtung aufweisen.

3. Zelliges Elastomer nach Anspruch 1 oder 2, **dadurch gekennzeichnet, dass** es sich um ein zelliges Polyurethanelastomer handelt.

4. Zelliges Elastomer nach Anspruch 1 oder 2, **dadurch gekennzeichnet, dass** es sich um ein zelliges Polyurethanelastomer handelt mit einer Dichte nach DIN EN ISO 845 zwischen 200 und 5000 kg/m³, wobei sich die Dichte auf das Gesamtgewicht des zelligen Polyurethanelastomers bezieht.

5. Zelliges Elastomer nach Anspruch 1 oder 2, **dadurch gekennzeichnet, dass** das zellige Elastomer magnetisierbare Teilchen enthält.

6. Zelliges Elastomer nach Anspruch 5, **dadurch gekennzeichnet, dass** als magnetisierbares Teilchen in dem zelligen Elastomer Eisenpulver enthalten ist.

7. Zelliges Elastomer nach Anspruch 5, **dadurch gekennzeichnet, dass** als magnetisierbares Teilchen in dem zelligen Elastomer Carbonyleisenpulver enthalten ist.

8. Zelliges Elastomer nach Anspruch 5, **dadurch gekennzeichnet, dass** die magnetisierbaren Teilchen eine sphärische, stäbchen- oder nadelförmige Form aufweisen.

9. Zelliges Elastomer nach Anspruch 5, **dadurch gekennzeichnet, dass** als magnetisierbare Teilchen sphärische Teilchen in dem zelligen Elastomer vorliegen, die einen mittleren Durchmesser [d₅₀] zwischen 0,01 bis 1000 µm aufweisen.

10. Zelliges Elastomer nach Anspruch 5, **dadurch gekennzeichnet, dass** als magnetisierbare Teilchen in dem zelligen Elastomer solche vorliegen, die eine mittlere längste Ausdehnung zwischen 0,01 bis 1000 µm aufweisen.

11. Zelliges Elastomer nach Anspruch 5, **dadurch gekennzeichnet, dass** die magnetisierbaren Teilchen eine kettenförmige Ausrichtung entlang einer Raumrichtung aufweisen und entsprechend anisotrop ausgerichtet sind.

12. Zelliges Elastomer nach Anspruch 5, **dadurch gekennzeichnet, dass** das zellige Elastomer zwischen 1 und 95 Gew.-% magnetisierbare Teilchen enthält, bezogen auf das Gesamtgewicht des zelligen Elstomers enthaltend die magnetisierbaren Teilchen.

13. Verfahren zur Herstellung von zelligen Elastomeren, **dadurch gekennzeichnet, dass** man die zelligen Elastomere in Gegenwart von magnetisierbaren Teilchen herstellt, so dass diese magnetisierbaren Teilchen in dem zelligen Elastomer vorliegen, und die Herstellung der zelligen Elastomeren in Gegenwart eines Magnetfeldes durchführt, das eine Flussdichte von größer als 0,01 Tesla aufweist und das Volumen der Form von einem Magnetfeld erfüllt ist, dessen Feldlinien entlang der Raumrichtung verlaufen, in der das zellige Elastomer einen größeren Elastizitätsmodul aufweisen soll.

14. Verfahren nach Anspruch 13, **dadurch gekennzeichnet, dass** man in einer Form durch Umsetzung von (a) Isocyanaten mit (b) gegenüber Isocyanaten reaktiven Verbindungen zellige Polyurethanelastomere herstellt, wobei in mindestens einer der Ausgangskomponenten magnetisierbare Teilchen enthaltend sind.

15. Verfahren nach Anspruch 13, **dadurch gekennzeichnet, dass** man das magnetische Feld mittels Permanentmagneten oder Elektromagneten oder einer Kombination von Permanent- und Elektromagneten erzeugt.

16. Verfahren nach Anspruch 13, **dadurch gekennzeichnet, dass** man in der ersten Stufe durch Umsetzung von (a) Isocyanat mit (b) gegenüber Isocyanaten reaktiven Verbindungen und gegebenenfalls Kettenverlängerung- und/oder Vernetzungsmitteln (c) ein Isocyanatgruppen aufweisendes Prepolymer herstellt und dieses Prepolymer in der zweiten Stufe in einer Form mit einer Vernetzerkomponente enthaltend (d) Wasser sowie gegebenenfalls (e) Katalysatoren, (f) Treibmittel und/oder (g) Hilfsmittel zu einem zelligen Polyurethanelastomeren umsetzt, wobei in dem Prepolymer und/oder der Vernetzerkomponente magnetisierbare Teilchen enthaltend sind.

17. Verfahren nach Anspruch 13, **dadurch gekennzeichnet, dass** als magnetisierbare Teilchen solche auf Basis von Eisenpulver, bevorzugt Carbonyleisenpulver enthalten sind.

18. Verfahren nach Anspruch 13, **dadurch gekennzeichnet, dass** als magnetisierbare Teilchen solche auf Basis von Carbonyleisenpulver enthalten sind.

19. Verfahren nach Anspruch 13, **dadurch gekennzeichnet, dass** die magnetisierbaren Teilchen eine sphärische, stäbchen- oder nadelförmige Form aufweisen.

20. Verfahren nach Anspruch 13, **dadurch gekennzeichnet, dass** als magnetisierbare Teilchen sphärische Teilchen in dem zelligen Elastomer vorliegen, die einen mittleren Durchmesser [d₅₀] zwischen 0,01 bis 1000 µm aufweisen.

21. Verfahren nach Anspruch 13, **dadurch gekennzeichnet, dass** als magnetisierbare Teilchen in dem zelligen Elastomer solche vorliegen, die eine mittlere längste Ausdehnung zwischen 0,01 bis 1000 µm aufweisen.

22. Verfahren nach Anspruch 13, **dadurch gekennzeichnet, dass** das zellige Elastomer zwischen 1 und 95 Gew.% magnetisierbaren Teilchen enthält, bezogen auf das Gesamtgewicht des zelligen Elastomers enthaltend die magnetisierbaren Teilchen.

23. Zelliges Elastomer erhältlich durch ein Verfahren gemäß einem der Ansprüche 13 bis 22.

24. Zusatzfedern, Federbein-/Dämpferlager und Fahrwerkslager in Kraftfahrzeugen enthaltend zelliges Elastomer gemäß einem der Ansprüche 1 bis 12 oder 23.

## Claims

1. A cellular elastomer which is anisotropic, with anisotropy being defined by the compressive modulus in one of three orthogonal directions being greater than that in the other two directions by a factor of at least 1.5.

2. A cellular elastomer comprising magnetizable particles which have a chain-like alignment along one spatial direction.

3. The cellular elastomer according to claim 1 or 2 which is a cellular polyurethane elastomer.

4. The cellular elastomer according to claim 1 or 2 which is a cellular polyurethane elastomer having a density in accordance with DIN EN ISO 845 in the range from 200 to 5000 kg/m³, with the density being based on the total weight of the cellular polyurethane elastomer.

5. The cellular elastomer according to claim 1 or 2 comprising magnetizable particles.

6. The cellular elastomer according to claim 5, wherein iron powder is comprised as magnetizable particles in the cellular elastomer.

7. The cellular elastomer according to claim 5, wherein carbonyl iron powder is comprised as magnetizable particles in the cellular elastomer.

8. The cellular elastomer according to claim 5, wherein the magnetizable particles have a spherical, rod-like or acicular shape.

9. The cellular elastomer according to claim 5, wherein spherical particles having a mean diameter [d₅₀] in the range from 0.01 to 1000 µm are present as magnetizable particles in the cellular elastomer.

10. The cellular elastomer according to claim 5, wherein magnetizable particles having a mean longest dimension in the range from 0.01 to 1000 µm are present as magnetizable particles in the cellular elastomer.

11. The cellular elastomer according to claim 5, wherein the magnetizable particles have a chain-like alignment along one spatial direction and are accordingly aligned anisotropically.

12. The cellular elastomer according to claim 5 comprising from 1 to 95% by weight of magnetizable particles, based on the total weight of the cellular elastomer comprising the magnetizable particles.

13. A process for producing cellular elastomers, wherein the cellular elastomers are produced in the presence of magnetizable particles so that these magnetizable particles are present in the cellular elastomer and the production of the cellular elastomers is carried out in the presence of a magnetic field which has a flux density of greater than 0.01 tesla and the volume of the mold is filled by a magnetic field whose field lines run parallel to the spatial direction in which the cellular elastomer is to have a greater elastic modulus.

14. The process according to claim 13, wherein cellular polyurethane elastomers are produced in a mold by reaction of (a) isocyanates with (b) compounds which are reactive toward isocyanates, with magnetizable particles being comprised in at least one of the starting components.

15. The process according to claim 13, wherein the magnetic field is produced by means of permanent magnets or electromagnets or a combination of permanent magnets and electromagnets.

16. The process according to claim 13, wherein a prepolymer having isocyanate groups is prepared by reaction of (a) isocyanate with (b) compounds which are reactive toward isocyanates and optionally chain extenders and/or crosslinkers (c) in the first stage and this prepolymer is reacted with a crosslinker component comprising (d) water and optionally (e) catalysts, (f) blowing agents and/or (g) auxiliaries in a mold in the second stage to give a cellular polyurethane elastomer, with magnetizable particles being comprised in the prepolymer and/or the crosslinker component.

17. The process according to claim 13, wherein magnetizable particles based on iron powder, preferably carbonyl iron powder, are comprised as magnetizable particles.

18. The process according to claim 13, wherein magnetizable particles based on carbonyl iron powder are comprised as magnetizable particles.

19. The process according to claim 13, wherein the magnetizable particles have a spherical, rod-like or acicular shape.

20. The process according to claim 13, wherein spherical particles having a mean diameter [d₅₀] in the range from 0.01 to 1000 µm are present as magnetizable particles in the cellular elastomer.

21. The process according to claim 13, wherein magnetizable particles having a mean longest dimension in the range from 0.01 to 1000 µm are present as magnetizable particles in the cellular elastomer.

22. The process according to claim 13, wherein the cellular elastomer comprises from 1 to 95% by weight of magnetizable particles, based on the total weight of the cellular elastomer comprising the magnetizable particles.

23. A cellular elastomer obtainable by a process according to any of claims 13 to 22.

24. A helper spring, shock-absorbing strut/shock absorber bearing or chassis bearing in a motor vehicle comprising a cellular elastomer according to any one of claims 1 to 12 or 23.

## Revendications

1. Elastomère cellulaire, **caractérisé en ce que** l'élastomère cellulaire est anisotrope, l'anisotropie étant définie **en ce que** le module de pression dans une des 3 directions orthogonales est supérieur au moins d'un facteur 1,5 à celui dans les deux autres directions.

2. Elastomère cellulaire, **caractérisé en ce que** l'élastomère cellulaire contient des particules magnétisables, qui présentent une orientation en forme de chaîne le long d'une direction spatiale.

3. Elastomère cellulaire selon la revendication 1 ou 2, **caractérisé en ce qu'**il s'agit d'un élastomère de polyuréthane cellulaire.

4. Elastomère cellulaire selon la revendication 1 ou 2, **caractérisé en ce qu'**il s'agit d'un élastomère de polyuréthane cellulaire, présentant une densité selon la norme DIN EN ISO 845 entre 200 et 5000 kg/m³, la densité se rapportant au poids total de l'élastomère de polyuréthane cellulaire.

5. Elastomère cellulaire selon la revendication 1 ou 2, **caractérisé en ce que** l'élastomère cellulaire contient des particules magnétisables.

6. Elastomère cellulaire selon la revendication 5, **caractérisé en ce que** de la poudre de fer est contenue, en tant que particules magnétisables, dans l'élastomère cellulaire.

7. Elastomère cellulaire selon la revendication 5, **caractérisé en ce que** de la poudre de carbonyle de fer est contenue, en tant que particules magnétisables, dans l'élastomère cellulaire.

8. Elastomère cellulaire selon la revendication 5, **caractérisé en ce que** les particules magnétisables présentent une forme sphérique, en bâtonnets ou en forme d'aiguilles.

9. Elastomère cellulaire selon la revendication 5, **caractérisé en ce que** des particules sphériques qui présentent un diamètre moyen [d₅₀] entre 0,01 à 1000 µm se trouvent en tant que particules magnétisables dans l'élastomère cellulaire.

10. Elastomère cellulaire selon la revendication 5, **caractérisé en ce que** l'élastomère contient, en tant que particules magnétisables, des particules qui présentent une extension moyenne la plus longue entre 0,01 à 1000 µm.

11. Elastomère cellulaire selon la revendication 5, **caractérisé en ce que** les particules magnétisables présentent une orientation en forme de chaîne le long d'une direction spatiale et sont orientées de manière anisotrope correspondante.

12. Elastomère cellulaire selon la revendication 5, **caractérisé en ce que** l'élastomère cellulaire contient entre 1 et 95% en poids de particules magnétisables, par rapport au poids total de l'élastomère cellulaire contenant les particules magnétisables.

13. Procédé pour la préparation d'élastomères cellulaires, **caractérisé en ce qu'**on prépare les élastomères cellulaires en présence de particules magnétisables, de manière telle que ces particules magnétisables se trouvent dans les élastomères cellulaires et on réalise la préparation des élastomères cellulaires en présence d'un champ magnétique, qui présente densité de flux énergétique supérieure à 0,01 Tesla, et le volume du moule est rempli par un champ magnétique, dont les lignes de champ s'étendent le long d'une direction spatiale dans laquelle l'élastomère cellulaire doit présenter un module d'élasticité plus grand.

14. Procédé selon la revendication 13, **caractérisé en ce qu'**on prépare, dans un moule, par transformation de (a) des isocyanates avec (b) des composés réactifs par rapport aux isocyanates, des élastomères de polyuréthane cellulaires, des particules magnétisables étant contenues dans au moins un des composants de départ.

15. Procédé selon la revendication 13, **caractérisé en ce qu'**on génère le champ magnétique au moyen d'aimants permanents ou d'électroaimants ou d'une combinaison d'aimants permanents et d'électroaimants.

16. Procédé selon la revendication 13, **caractérisé en ce qu'**on prépare, dans la première étape, par transformation de (a), de l'isocyanate, avec (b), des composés réactifs par rapport aux isocyanates et le cas échéant des agents d'allongement de chaîne et/ou des réticulants, (c) un prépolymère présentant des groupes isocyanate et on transforme ce prépolymère, dans la deuxième étape, dans un moule avec un composant réticulant contenant (d) de l'eau ainsi que le cas échéant (e) des catalyseurs, (f) des agents gonflants et/ou (g) des adjuvants, en un élastomère de polyuréthane cellulaire, des particules magnétisables étant contenues dans le prépolymère et/ou le composant réticulant.

17. Procédé selon la revendication 13, **caractérisé en ce que** des particules à base de poudre de fer, de préférence de poudre de carbonyle de fer, sont contenues en tant que particules magnétisables.

18. Procédé selon la revendication 13, **caractérisé en ce que** des particules à base de poudre de carbonyle de fer sont contenues en tant que particules magnétisables.

19. Procédé selon la revendication 13, **caractérisé en ce que** les particules magnétisables présentent une forme sphérique, en bâtonnets ou en forme d'aiguilles.

20. Procédé selon la revendication 13, **caractérisé en ce que** des particules sphériques qui présentent un diamètre moyen [d₅₀] entre 0,01 à 1000 µm se trouvent en tant que particules magnétisables dans l'élastomère cellulaire.

21. Procédé selon la revendication 13, **caractérisé en ce que** l'élastomère contient, en tant que particules magnétisables, des particules dont l'extension moyenne la plus longue est située entre 0,01 à 1000 µm.

22. Procédé selon la revendication 13, **caractérisé en ce que** l'élastomère cellulaire contient entre 1 et 95% en poids de particules magnétisables, par rapport au poids total de l'élastomère cellulaire contenant les particules magnétisables.

23. Elastomère cellulaire pouvant être obtenu par un procédé selon l'une quelconque des revendications 13 à 22.

24. Ressorts supplémentaires, paliers pour jambe de force/amortisseur et paliers de suspension dans des véhicules automobiles contenant l'élastomère cellulaire selon l'une quelconque des revendications 1 à 12 ou 23.
